# EUROPEAN PATENT SPECIFICATION

(11) **EP 3 320 596 B1**
(45) Date of publication and mention of the grant of the patent: **05.04.2023**
(21) Application number: 16747554.0
(22) Date of filing: 08.07.2016
(51) Int. Cl.: H02J 7/00

(54) **PORTABLE BATTERY PACK**
TRAGBARES BATTERIEPACK
BLOC-BATTERIE PORTABLE

(30) Priority: 09.07.2015 GB 201512066
(43) Date of publication of application: 16.05.2018
(73) Proprietor: Mobile Power Limited, Sheffield S9 2QD (GB)
(72) Inventor: BALLAM, Daniel William, Sheffield South Yorkshire S1 4FS (GB); LONGBOTTOM, Christopher, Sheffield South Yorkshire S1 4FS (GB); WEST, Jonathan Cope, Sheffield South Sheffield S1 4FS (GB)
(74) Representative: Froud, Christopher Andrew
(86) International application number: PCT/GB2016/052053
(87) International publication number: WO 2017/006125

(56) References cited:
- WO-A1-85/01812
- US-A1- 2014 253 021
- US-B1- 6 664 000

## Description

### Field of the Invention

The present invention relates to a portable battery pack, such as a portable battery pack for use in rural communities without access to mains electricity. The present invention also relates to an activation station for a portable battery pack, an authorisation server and a system.

### Background of the Invention

In some parts of the world, such as rural Africa, individual households and whole communities have no access to mains electricity. The remote nature of the locations involved means that installing mains electricity is not economically viable.

Small scale renewable energy schemes, such as solar panels or wind turbines, can provide electricity to these households and communities. However, the cost of installing and maintaining solar panels or wind turbines can prove prohibitively expensive. Also, renewable energy tends to be unable to supply electricity continuously, for example, because there is not always sufficient wind to operate a wind turbine.

Given the lack of mains electricity, people in these communities frequently rely on paraffin lamps for lighting. Paraffin lamps give off toxic fumes, are a fire hazard, and produce little light. Battery operated lights are far superior but few people can afford to purchase the batteries needed to run them, and rechargeable batteries still need a source of electricity for charging.

Many people in these communities have mobile phones and smartphones, but a lack of mains electricity means that charging these phones can be challenging, restricting the amount people can use their phone.

Some entrepreneurs operate outlets providing battery rental, where a charged battery may be rented for a period of time and returned when empty. However, many batteries are stolen which has led to a lack of desire to invest in battery rental businesses. As a result, there are too few outlets, forcing many people to walk significant distances to rent a battery. A lack of safety features on the available rental batteries and charging infrastructure mean that there is a risk that the battery will be faulty, not delivering a full charge, and may even risk overheating and catching fire.

It would, therefore, be desirable to find a portable battery pack, and associated charging infrastructure, which overcomes these problems and makes electrical power more available to households and communities in areas without access to mains electricity.

WO 85/01812 discloses a credit card activated vending machine for battery powered rental items.

US 2014/253021 A1 discloses an apparatus, method and article for authentication, security and control of portable charging devices and power storage devices, such as batteries.

### Summary of the Invention

According to a first aspect of the invention, there is provided a portable battery pack. The portable battery pack has an input, one or more cells configured to store electrical energy, and a processor. The processor is configured to control at least one of: charging of the one or more cells based on a charging authorisation signal received at the input; and discharging of the one or more cells based on a discharging authorisation signal received at the input.

The fact that the portable battery pack has a processor which controls at least one of charging of the one or more cells based on a charging authorisation signal and discharging of the one or more cells based on a discharging authorisation signal means that charging and/or discharging of the portable battery pack is only allowed when pre-authorised (for example, by an authorisation server) which allows the portable battery pack to be remotely controlled.

The remote control of charging and/or discharging means that the portable battery pack is more likely to be charged by authorised equipment, because unauthorised equipment is unlikely to be able to provide the necessary signal to authorise charging and/or discharging.

Encouraging charging by authorised equipment improves safety, as charging the portable battery pack on an unauthorised charger leads to an increased risk of overheating of the portable battery pack which could even lead to fire.

Discharging may be disabled, for example, if the battery is old or faulty, again improving safety and reducing the incidence of poor performance associated with old or faulty portable battery packs.

The remote control of charging and/or discharging also means that portable battery packs are less prone to theft (because they cannot be charged by unauthorised equipment, there is less incentive to steal the battery packs). As the portable battery packs are less prone to theft, this will reduce the cost of the portable battery packs and provide a guaranteed rental income which will encourage investment in portable battery pack technology and associated infrastructure, making portable battery pack technology more available to people in rural areas, such as rural Africa, who will then benefit by having better access to cheap and reliable electricity in their homes. A source of cheap and reliable electricity will offer improvements to their lives, such as access to mobile communications and lighting which will allow, them, for example, to study and become better educated.

The processor may be configured to enable charging of the one or more cells when the charging authorisation signal indicates that charging is authorised.

The processor may be configured to disable charging of the one or more cells when the charging authorisation signal indicates that charging is not authorised.

The processor may be configured to enable discharging of the one or more cells when the discharging authorisation signal indicates that discharging is authorised.

The processor may be configured to disable discharging of the one or more cells when the discharging authorisation signal indicates that discharging is not authorised.

The portable battery pack may comprise one or more switches, such as one or more relays or transistors.

The portable battery pack may comprise a discharging switch. The discharging switch may be closed by the processor in response to the discharging authorisation signal indicating that discharging is authorised, which allows the one or more cells to be discharged. The discharging switch may be opened by the processor in response to the discharging authorisation signal indicating that discharging is not authorised, which prevents the one or more cells being discharged.

The portable battery pack may comprise a charging switch. The charging switch may be closed by the processor in response to the charging authorisation signal indicating that charging is authorised, which allows the one or more cells to be charged. The charging switch may be opened by the processor in response to the charging authorisation signal indicating that charging is not authorised, which prevents the one or more cells being charged.

The processor may be configured to disable discharging of the one or more cells after a period of time has elapsed. The fact that the processor is configured to disable discharging of the one or more cells after a period of time has elapsed means that discharging of the portable battery pack can be pre-authorised for a limited period of time. This may help to reduce theft, for example, because the portable battery pack must be reconnected to an activation station before further discharging is authorised.

The processor may receive a signal from the input indicating the period of time. The period of time may be one of a period of time since discharging of the one or more cells was authorised; a period of time since discharging of the one or more cells first began following the last time discharging of the one or more cells was authorised; or a sum of the discharge time since the last time discharging of the one or more cells was authorised.

The processor may be further configured to send identifying information, for example, to an external device such as an activation station. The processor may have an output to which the identifying information is sent. An advantage of the processor being further configured to send identifying information to the activation station is that the activation station can identify the portable battery pack, for example, to determine that the portable battery pack is authorised for charging and/or discharging, or that the portable battery pack has not been marked for retirement or marked as faulty.

The portable battery pack may have a connection to allow the portable battery pack to be connected to an external charge controller. The cells may be configured to be charged using the external charge controller. An advantage of the cells being configured to be charged by an external charge controller (that is, a charge controller which is not part of the portable battery pack) is that the portable battery pack does not need its own charge controller, eliminating the additional weight and bulk of a charge controller from the portable battery pack and reducing the cost of the portable battery pack. Also, by making the charge controller external to the portable battery pack, the charger controller may be larger, more efficient and better cooled, and therefore may be able to charge the portable battery pack more quickly and efficiently.

The processor may be further configured to send a charging specification to the external charge controller. An advantage of the processor being further configured to send a charging specification to the external charge controller is that the portable battery pack can indicate the preferred charging conditions of the portable battery pack, thereby ensuring that optimum charging of the portable battery pack is achieved, based on the type of cells in the portable battery pack, thereby improving the lifetime of the cells and reducing the risk of failure, damage, overheating or fire.

The portable battery may further comprise a memory configured to store a log file.

The log file may contain historical usage information of the portable battery pack. For example, the log file may contain: the number of times the portable battery pack has been charged and/or discharged; the current draw profile for each occasion the portable battery pack has been discharged; the total length of discharge since the last charge; the charging conditions for each occasion the portable battery pack has been charged (such as the voltage and/or current supplied during charging); and any errors or faults that have occurred.

The log file may be used to determine when the portable battery pack should be retired because it is old or faulty. For example, the log file may indicate that the one or more cells in the portable battery pack are not performing adequately; or may record that the one or more cells were exhausted before the period of time expired.

The log file may be sent to an activation station when the portable battery pack is connected to the activation station.

The portable battery pack may receive depth of discharge information, for example, from the input. The processor may disable discharging based on the depth of discharge information. This allows depth of discharge to be dynamically controlled by the activation station, to manipulate charging time while seeking to maximise the life of the battery. Over-discharging the cells may be avoided where unnecessary (for example, when there is sufficient time to fully charge the cells). However, if there is insufficient time to fully charge the cells, the signal may be configured to indicate that the end of discharge voltage may be dropped so that the cells appear to a user to have been given a full charge.

The input may be connected to an activation station. The input may be connected periodically to the activation station. The input may be connected to the activation station by a wired or wireless connection. The processor may be configured to send when the portable battery pack is connected to an activation station.

The processor may be configured to communicate over a secure communication link. The processor may be configured to communicate with the activation server over a secure communication link. Communicating over a secure communications link makes it more difficult for a third party to intercept the signal and determine a signal which could be used to authorise charging and/or discharging of the portable battery pack, which helps to prevent unauthorised equipment from charging the portable battery pack or prevents unauthorised equipment from authorising the portable battery pack to be discharged.

The processor may initiate the secure communication link using challenge-response authentication. The processor may provide a challenge to an activation station connected to the portable battery pack. The activation station may provide a response in reply to the challenge. The processor may only initiate secure communications with the activation station if a correct response is received. This means that the activation station will only be able to enable and/or disable charging and/or discharging if the activation station is able to provide the correct response. The use of challenge-response authentication therefore helps to prevent unauthorised equipment from charging the portable battery pack or prevents unauthorised equipment from authorising the portable battery pack to be discharged

The secure communication link may be encrypted.

The secure communication link may comprise a tunnel to an authorisation server.

An authorisation server may provide authorisation information to the activation station.

The secure communications link may use communications hardware in the activation station (such as a modem) so that the portable battery pack does not need to include the extra cost and weight of a modem, and so that only one modem is needed in an activation station which can be shared with all the portable battery packs that are charged at that activation station, significantly reducing the cost of the portable battery packs.

The portable battery pack may further comprise an electrical output configured to provide electrical energy to a device connected to the electrical output. The output may be a USB socket.

The output may be configured to provide electrical energy to the device connected to the electrical output only when discharging is authorised.

A portable battery pack is designed to be carried or moved easily by a user, for example, to allow the user to take the portable battery pack home to provide electricity in their home, or to allow the user to carry the portable battery pack with them to provide a mobile source of electricity.

According to a second aspect of the invention, there is provided an activation station for a portable battery pack. The activation station comprises an output and a processor. The processor is configured to send, to the output, at least one of a charging authorisation signal that indicates to the portable battery pack whether charging of the one of more cells is authorised; and a discharging authorisation signal that indicates to the portable battery pack whether discharging of the one or more cells is authorised.

The fact that the activation station sends to the output (which may be connected to the portable battery pack) at least one of a charging authorisation signal that indicates to the portable battery pack whether charging of the one of more cells is authorised and a discharging authorisation signal that indicates to the portable battery pack whether discharging of the one or more cells is authorised means that charging and/or discharging of the portable battery pack is only allowed when pre-authorised (for example, by an authorisation server) which allows the portable battery pack to be remotely controlled.

The remote control of charging and/or discharging means that the portable battery pack is more likely to be charged by authorised equipment, because unauthorised equipment is unlikely to be able to provide the necessary signal to authorise charging and/or discharging.

Encouraging charging by authorised equipment improves safety, as charging the portable battery pack on an unauthorised charger leads to an increased risk of overheating of the portable battery pack which could even lead to fire.

Discharging may be disabled, for example, if the battery is old or faulty, again improving safety and reducing the incidence of poor performance associated with old or faulty portable battery packs.

The remote control of charging and/or discharging also means that portable battery packs are less prone to theft (because they cannot be charged by unauthorised equipment, there is less incentive to steal the battery packs). As the battery packs are less prone to theft, this will reduce the cost of the battery packs and provide a guaranteed rental income which will encourage investment in portable battery pack technology and associated infrastructure, making portable battery pack technology more available to people in rural areas, such as rural Africa, who will then benefit by having better access to cheap and reliable electricity in their homes. A source of cheap and reliable electricity will offer improvements to their lives, such as access to mobile communications and lighting which will allow, for example, them to study and become better educated.

The processor may be configured to send, to the output, a charging authorisation signal that indicates that charging of the one or more cells is authorised.

The processor may be configured to send, to the output, a charging authorisation signal that indicates that charging of the one or more cells is not authorised.

The processor may be configured to send, to the output, a discharging authorisation signal that indicates that discharging of the one or more cells is authorised.

The processor may be configured to send, to the output, a discharging authorisation signal that indicates that discharging of the one or more cells is not authorised.

The processor may be configured to send a signal to the output indicating that charging of the one or more cells is not authorised when a desired charge level of the one or more cells is obtained. This prevents further charging of the one or more cells of the portable battery pack once the one or more cells have reached a desired charge level (such as fully charged, or an authorised charge level) so that the portable battery pack must be reconnected to an activation station to be recharged again which helps to prevent the portable battery pack being recharged on unauthorised equipment and reduces the incentive to steal a portable battery pack.

The processor may be configured to send a signal to the output indicating that discharging of the one or more cells is authorised when a desired charge level of the one or more cells is obtained.

The activation station may communicate over a secure communication link. Communicating over a secure communication link makes it more difficult for a third party to intercept the signal and determine a signal that could be used to authorise charging and/or discharging of the portable battery pack, which helps to prevent unauthorised equipment from charging the portable battery pack or prevents unauthorised equipment from authorising the portable battery pack to be discharged.

The secure communication link may use challenge-response authentication. The processor may receive a challenge from a portable battery pack connected to the activation station. The processor may provide a response to the challenge. Communication between the activation station and portable battery pack will only be initiated if the activation station provides a correct response. This means that the activation station will only be able to enable and/or disable charging and/or discharging if the activation station is able to provide the correct response. The use of challenge-response authentication therefore helps to prevent unauthorised equipment from charging the portable battery pack or prevents unauthorised equipment from authorising the portable battery pack to be discharged

The secure communication link may be encrypted.

The processor may be configured to generate the charging authorisation signal based on authorisation information obtained from a server, such as an authorisation server.

The processor may be configured to generate the discharging authorisation signal based on authorisation information obtained from a server, such as an authorisation server.

The authorisation information may indicate whether charging and/or discharging of the one or more cells is authorised. The authorisation server may hold information about a plurality of portable battery packs, indicating whether each portable battery pack of the plurality of battery packs is authorised for charging and/or discharging. The authorisation server may also hold information about portable battery packs of the plurality of battery packs that are faulty or retired, and may indicated that they will never again be authorised for charging and/or discharging.

The activation station may further comprise a modem configured to obtain the authorisation information from the server. By providing a modem in the activation station, the portable battery pack need not include the extra cost and weight of a modem, so that only one modem is needed in an activation station which may charge many portable battery pack, significantly reducing the cost of the portable battery packs.

The secure communications link may comprise a tunnel between the portable battery pack and an authorisation server using the modem.

The activation station may send identifying information, received from a portable battery pack, to the authorisation server.

The modem may relay the identifying information received from the portable battery pack to the authorisation server over a secure communications tunnel using the modem. The authorisation server may relay the signal, indicating whether charging and/or discharging of the one or more cells is authorised, to the portable battery pack over a secure communications tunnel using the modem.

The processor may send a signal which indicates a period of time after which discharging of the one or more cells is to be disabled. This means that discharging of the portable battery pack can be pre-authorised for a limited period of time. This may help to reduce theft because the portable battery pack must be reconnected to an activation station before further discharging is authorised.

The period of time may be one of: a period of time since discharging of the one or more cells was authorised; a period of time since discharging of the one or more cells first began following the last time discharging of the one or more cells was authorised; or a sum of the discharge time since the last time discharging of the one or more cells was authorised.

The activation station may have an input configured to receive identifying information from the portable battery pack. An advantage of this is that the activation station can identify the portable battery pack, for example, to determine whether the portable battery pack is authorised for charging and/or discharging, or that the portable battery pack has not been marked for retirement or marked as faulty.

The activation station processor may send the identifying information to an authorisation server, to determine whether the portable battery pack is authorised for charging and/or discharging.

The activation station may be configured to be connected to a plurality of portable battery packs.

The activation station may further comprise a charge controller configured to charge the one or more cells of the portable battery pack. An advantage of the activation station having a charge controller which can charge the one or more cells of the portable battery pack is that the portable battery pack does not need its own charge controller, eliminating the additional weight and bulk of a charge controller from the portable battery pack and reducing the cost of the portable battery pack. Also, by putting the charge controller in the activation station, the charger controller may be larger, more efficient and better cooled, and therefore may be able to charge the portable battery pack more quickly and efficiently.

The charge controller may be configured to charge a plurality of portable battery packs. In this way, it is not necessary to provide an individual charge controller for each portable battery pack, reducing the cost of the activation station. Instead, a single high capacity charge controller can be provided which is more efficient and better cooled, and therefore may be able to charge the portable battery pack more quickly and efficiently.

The activation station processor may be further configured to receive a charging specification. The activation station may receive the charging specification from the portable battery pack or a server (such as the activation server). The charge controller may be configured to charge the one or more cells of the portable battery pack based on the charging specification. An advantage of the activation station processor being further configured to receive a charging specification is that the preferred charging conditions of the portable battery pack are known, thereby ensuring that optimum charging of the portable battery pack is achieved, based on the type of cells in the portable battery pack, thereby improving the lifetime of the cells and reducing the risk of failure, damage, overheating or fire.

The charge controller may be configured to adjust the rate of charging the portable battery pack based on one of: the time of day, or a desired charging time of the portable battery pack.

Most charge controllers will charge a portable battery pack as quickly as possible, whereas charging a portable battery pack more slowly tends to increase the lifetime of the portable battery pack. The charge controller may adjust the charging rate of the portable battery pack based on how quickly a charged portable battery pack is needed. For example, if the charge controller detects that the portable battery pack is being charged at night, the charge controller may charge the portable battery pack relatively more slowly because the portable battery pack will probably not be needed until the next morning. In contrast, if the charge controller detects that the portable battery pack is being charged during the day, the charge controller may charge the portable battery pack relatively more quickly, or may charge the portable battery pack as quickly as possible, so that the charged portable battery pack is available more quickly.

The activation station processor may be configured to receive a log file from the portable battery pack when the portable battery pack is connected to the activation station.

The log file may contain historical usage information of the portable battery pack. For example, the log file may contain: the number of times the portable battery pack has been charged and/or discharged; the current draw profile for each occasion the portable battery pack has been discharged; the total length of discharge since last charge; the charging conditions for each occasion the portable battery pack has been charged (such as the voltage and/or current supplied during charging); any errors or faults that have occurred.

The log file may be used to determine when the portable battery pack should be retired because it is old or faulty. For example, the log file may indicate that the one or more cells in the portable battery pack are not performing adequately, or that the one or more cells were exhausted before the period of time expired.

The activation station processor may be configured to send depth of discharge information to the output. This allows depth of discharge to be dynamically controlled by the activation station to manipulate charging time while seeking to maximise the life of the battery. Over-discharging the cells may be avoided where unnecessary (for example, when there is sufficient time to fully charge the cells). However, if there is insufficient time to fully charge the cells, the signal may indicate that the end of discharge voltage may be dropped so that the cells appear to a user to have been given a full charge.

The signal may be sent when the portable battery pack is connected to the activation station.

According to a third aspect of the invention, there is provided a method of controlling authorisation of at least one of charging and discharging of a portable battery pack comprising one or more cells. The method comprises at least one of generating a charging authorisation signal indicating whether charging of the portable battery pack is authorised; and sending the charging authorisation signal to the portable battery pack; and generating a discharging authorisation signal indicating whether discharging of the portable battery pack is authorised; and sending the discharging authorisation signal to the portable battery pack

The fact that the method comprises at least one of generating a charging authorisation signal indicating whether charging of the portable battery pack is authorised and sending the charging authorisation signal to the portable battery pack, and generating a discharging authorisation signal indicating whether discharging of the portable battery pack is authorised and sending the discharging authorisation signal to the portable battery pack means that charging and/or discharging of the portable battery pack is only allowed when pre-authorised (for example, by an authorisation server) which allows the portable battery pack to be remotely controlled.

The remote control of charging and/or discharging means that the portable battery pack is more likely to be charged by authorised equipment, because unauthorised equipment is unlikely to be able to provide the necessary signal to authorise charging and/or discharging.

Encouraging charging by authorised equipment improves safety, as charging the portable battery pack on an unauthorised charger leads to an increased risk of overheating of the portable battery pack which could even lead to fire.

Discharging may be disabled, for example, if the battery is old or faulty, again improving safety and reducing the incidence of poor performance associated with old or faulty portable battery packs.

The remote control of charging and/or discharging also means that portable battery packs are less prone to theft (because they cannot be charged by unauthorised equipment, there is less incentive to steal the battery packs). As the battery packs are less prone to theft, this will reduce the cost of the battery packs and provide a guaranteed rental income which will encourage investment in portable battery pack technology and associated infrastructure, making portable battery pack technology more available to people in rural areas, such as rural Africa, who will then benefit by having better access to cheap and reliable electricity in their homes. A source of cheap and reliable electricity will offer improvements to their lives, such as access to mobile communications and lighting which will allow, for example, them to study and become better educated.

The charging authorisation signal may indicate that charging of the one or more cells is authorised.

The charging authorisation signal may indicate that charging of the one or more cells is not authorised.

The discharging authorisation signal may indicate that discharging of the one or more cells is authorised.

The discharging authorisation signal may indicate that discharging of the one or more cells is not authorised

The method may comprise sending a signal to the portable battery pack indicating that charging of the one or more cells is not authorised when a desired charge level of the one or more cells is obtained. This prevents further charging of the one or more cells of the portable battery pack once the one or more cells have reached a desired charge level (such as fully charged, or an authorised charge level) so that the portable battery pack must be reconnected to an activation station to be recharged again which helps to prevent the portable battery pack being recharged on unauthorised equipment.

The method may comprise sending a signal to the portable battery pack indicating that discharging of the one or more cells is authorised when a desired charge level of the one or more cells is obtained.

The method may comprise communicating over a secure communication link. Communicating over a secure communication link makes it more difficult for a third party to intercept the signal and determine a signal that could be used to authorise charging and/or discharging of the portable battery pack, which helps to prevent unauthorised equipment from charging the portable battery pack or prevents unauthorised equipment from authorising the portable battery pack to be discharged.

The secure communication link may use challenge-response authentication. A challenge may be sent by the portable battery pack to an activation station connected to the portable battery pack. The activation station may provide a response to the challenge. Communication between the activation station and portable battery pack will only be initiated if the activation station provides a correct response. This means that the activation station will only be able to enable and/or disable charging and/or discharging if the activation station is able to provide the correct response. The use of challenge-response authentication therefore helps to prevent unauthorised equipment from charging the portable battery pack or prevents unauthorised equipment from authorising the portable battery pack to be discharged

The secure communication link may be encrypted.

The method may comprise generating the charging authorisation signal based on authorisation information obtained from a server, such as an authorisation server.

The method may comprise generating the discharging authorisation signal based on authorisation information obtained from a server, such as an authorisation server.

The authorisation information may indicate whether charging and/or discharging of the one or more cells is authorised. The server may hold information about a plurality of portable battery packs, indicating whether each portable battery pack of the plurality of battery packs is authorised for charging and/or discharging. The server may also hold information about portable battery packs of the plurality of battery packs that are faulty or retired, and may indicated that they will never again be authorised for charging and/or discharging.

The method may comprise communicating with the server to obtain the authorisation information using a modem external to the portable battery pack. By providing a modem external to the portable battery pack, the portable battery pack need not include the extra cost and weight of a modem, so that only one modem is needed in an activation station which may charge many portable battery pack, significantly reducing the cost of the portable battery packs.

The secure communications link may comprise a tunnel between the portable battery pack and an authorisation server using the modem.

The method may comprise establishing a secure communications tunnel between the portable battery pack and an authorisation server using the modem.

The method may comprise sending a signal which indicates a period of time after which discharging of the one or more cells is disabled. This means that discharging of the portable battery pack can be pre-authorised for a limited period of time. This may help to reduce theft because the portable battery pack must be reconnected to an activation station before further discharging is authorised.

The period of time may be one of: a period of time since discharging of the one or more cells was authorised; a period of time since discharging of the one or more cells first began following the last time discharging of the one or more cells was authorised; or a sum of the discharge time since the last time discharging of the one or more cells was authorised.

The method may comprise receiving identifying information from the portable battery pack. An advantage of receiving identifying information from portable battery pack is that the portable battery pack can be identified, for example, to determine that the portable battery pack is authorised for charging and/or discharging, or that the portable battery pack has not been marked for retirement or marked as faulty

The method may comprise charging the one or more cells of the portable battery pack with a charge controller external to the portable battery pack. For example, the charge controller may be in the activation station. An advantage of the charge controller being external to the portable battery pack is that the portable battery pack does not need its own charge controller, eliminating the additional weight and bulk of a charge controller from the portable battery pack and reducing the cost of the portable battery pack. Also, by having the charge controller external to the portable battery pack, the charger controller may be larger, more efficient and better cooled, and therefore may be able to charge the portable battery pack more quickly and efficiently

The method may comprise charging a plurality of portable battery packs with a single charge controller. In this way, it is not necessary to provide an individual charge controller for each portable battery pack, reducing cost. Instead, a single high capacity charge controller can be provided which is more efficient and better cooled, and therefore may be able to charge the portable battery pack more quickly and efficiently.

The method may comprise receiving a charging specification from the portable battery pack or a server (such as an authorisation server). The charge controller may charge the one or more cells of the portable battery pack based on the charging specification. An advantage of the charging specification is that the preferred charging conditions of the portable battery pack are known, thereby ensuring that optimum charging of the portable battery pack is achieved, based on the type of cells in the portable battery pack, thereby improving the lifetime of the cells and reducing the risk of failure, damage, overheating or fire.

The method may comprise obtaining historical usage information from the portable battery pack. The historical usage information may contain: the number of times the portable battery pack has been charged and/or discharged; the current draw profile for each occasion the portable battery pack has been discharged; the total length of discharge since last charge; the charging conditions for each occasion the portable battery pack has been charged (such as the voltage and/or current supplied during charging); any errors or faults that have occurred.

The historical usage information may be used to determine when the portable battery pack should be retired because it is old or faulty. For example, the historical usage information may indicate that the one or more cells in the portable battery pack are not performing adequately, or that the one or more cells were exhausted before the period of time expired.

The method may comprise sending a signal to the portable battery pack comprising depth of discharge information. This allows depth of discharge to be dynamically controlled by the activation station to manipulate charging time while seeking to maximise the life of the battery. Over-discharging the cells may be avoided where unnecessary (for example, when there is sufficient time to fully charge the cells). However, if there is insufficient time to fully charge the cells, the signal may indicate that the end of discharge voltage may be dropped so that the cells appear to a user to have been given a full charge.

The method may comprise adjusting the rate of charging the portable battery pack based on one of: the time of day; or a desired charging time.

Most charge controllers will charge a portable battery pack as quickly as possible, whereas charging a portable battery pack more slowly tends to increase the lifetime of the portable battery pack. The charging rate of the portable battery pack may be adjusted based on how quickly a charged portable battery pack is needed. For example, if the portable battery pack is being charged at night, the portable battery pack may be charged relatively more slowly because the portable battery pack will probably not be needed until the next morning. In contrast, if the portable battery pack is being charged during the day, the portable battery pack may be charged more quickly, or may be charged as quickly as possible, so that the charged portable battery pack is available more quickly.

According to a fourth aspect of the invention, there is provided an authorisation server to store authorisation information about a portable battery pack. The authorisation server comprises a memory and a processor. The memory comprises authorisation information to authorise control of at least one of charging and discharging of a portable battery pack comprising one or more cells. The processor is configured to receive a signal requesting authorisation information relating to the portable battery pack. The processor is also configured to retrieve the authorisation information from the memory. The processor is also configured to send the authorisation information.

The fact that the authorisation server sends authorisation information to authorise control of at least one of charging and discharging of a portable battery pack means that charging and/or discharging of the portable battery pack is only allowed when pre-authorised by the authorisation server which allows the portable battery pack to be remotely controlled.

The remote control of charging and/or discharging means that the portable battery pack is more likely to be charged by authorised equipment, because unauthorised equipment is unlikely to be able to authorise charging and/or discharging.

Encouraging charging by authorised equipment improves safety, as charging the portable battery pack on an unauthorised charger leads to an increased risk of overheating of the portable battery pack which could even lead to fire.

Discharging may be disabled, for example, if the battery is old or faulty, again improving safety and reducing the incidence of poor performance associated with old or faulty portable battery packs.

The remote control of charging and/or discharging also means that portable battery packs are less prone to theft (because they cannot be charged by unauthorised equipment, there is less incentive to steal the portable battery packs). As the battery packs are less prone to theft, this will reduce the cost of the battery packs and provide a guaranteed rental income which will encourage investment in portable battery pack technology and associated infrastructure, making portable battery pack technology more available to people in rural areas, especially rural Africa, who will then benefit by having better access to cheap and reliable electricity in their homes. A source of cheap and reliable electricity will offer improvements to their lives, such as access to mobile communications and lighting which will allow, for example, them to study and become better educated.

The authorisation server may send the authorisation information to the activation station or the portable battery pack.

The processor may be configured to generate a charging authorisation signal based on the authorisation information, the charging authorisation signal indicating whether charging of the portable battery pack is authorised. The processor may be configured to send the charging authorisation signal.

The charging authorisation signal may indicate that charging of the one or more cells of the portable battery pack is authorised if the authorisation information indicates that charging of the one or more cells of the portable battery pack is authorised.

The charging authorisation signal may indicate that charging of the one or more cells of the portable battery pack is not authorised if the authorisation information indicates that charging of the one or more cells of the portable battery pack is not authorised.

The processor may be configured to generate a discharging authorisation signal based on the authorisation information, the discharging authorisation signal indicating whether discharging of the portable battery pack is authorised. The processor may be configured to send the discharging authorisation signal.

The discharging authorisation signal may indicate that discharging of the one or more cells of the portable battery pack is authorised if the authorisation information indicates that discharging of the one or more cells of the portable battery pack is authorised.

The discharging authorisation signal may indicate that discharging of the one or more cells of the portable battery pack is not authorised if the authorisation information indicates that discharging of the one or more cells of the portable battery pack is authorised.

The memory may hold information about a plurality of portable battery packs, indicating whether each portable battery pack of the plurality of battery packs is authorised for charging and/or discharging. The authorisation server may also hold information about portable battery packs of the plurality of battery packs that are faulty or retired, and may indicated that they should never again be authorised for charging and/or discharging.

The authorisation server may communicate over a secure communications link. Communicating over a secure communication link makes it more difficult for a third party to intercept the communication and determine a signal which could be used to authorise charging and/or discharging of the portable battery pack, which helps to prevent unauthorised equipment from charging the portable battery pack or prevents unauthorised equipment from authorising the portable battery pack to be discharged.

The authorisation server may communicate with the activation station and/or the portable battery pack using challenge-response authentication.

The secure communication link may be encrypted.

The secure communications link may comprise a tunnel to the portable battery pack. The tunnel may be via a modem on the activation station.

The processor may send a signal indicating a period of time after which discharging of the one or more cells is to be disabled. This means that discharging of the portable battery pack can be pre-authorised for a limited period of time. This may help to reduce the incentive to steal the portable battery pack because the portable battery pack must be reconnected to an activation station before further discharging is authorised.

The period of time may be one of a period of time since discharging of the one or more cells was authorised; a period of time since discharging of the one or more cells first began following the last time discharging of the one or more cells was authorised; or a sum of the discharge time since the last time discharging of the one or more cells was authorised.

The processor may be further configured to receive identifying information about the portable battery pack. The authorisation server may be configured to use the identifying information to obtain the authorisation information from the memory. An advantage of the authorisation server processor being further configured to receive identifying information from the portable battery pack is that the authorisation server can identify the portable battery pack, for example, to determine that the portable battery pack is authorised, or that the portable battery pack has not been marked for retirement or marked as faulty.

The authorisation server processor may be configured to receive a log file from the portable battery pack.

The log file may contain historical usage information for the portable battery pack. For example, the log file may contain: the number of times the portable battery pack has been charged and/or discharged; the current draw profile for each occasion the portable battery pack has been discharged; the total length of discharge since the last charge; the charging conditions for each occasion the portable battery pack has been charged (such as the voltage and/or current supplied during charging); any errors or faults that have occurred.

The authorisation server processor may be configured to update the authorisation information in the memory based on the log file.

The log file may be used to determine when the portable battery pack should be retired because it is old or faulty, for example, because the one or more cells in the portable battery pack are not performing adequately. For example, the log file may record that the cells were exhausted before the period of time expired. The authorisation information may be updated to show that charging and/or discharging is permanently disabled because the portable battery pack is old or faulty.

According to a fifth aspect of the invention, there is provided a system comprising a portable battery pack, an activation station and an authorisation server. The portable battery pack has one or more cells configured to store electrical energy and a portable battery pack processor. The activation station comprises an activation station processor configured to request authorisation information. The authorisation server has a processor configured to retrieve the authorisation information from a memory of the authorisation server and send the authorisation information to the activation station. Based on the authorisation information, the activation station generates, and sends to the portable battery pack, at least one of a charging authorisation signal that indicates to the portable battery pack whether charging of the one of more cells is authorised and the portable battery pack controls charging of the one or more cells based on the charging authorisation signal; and a discharging authorisation signal that indicates to the portable battery pack whether discharging of the one or more cells is authorised and the portable battery pack controls discharging of the one or more cells based on the discharging authorisation signal.

Other optional features of the portable battery pack, activation station and authorisation server of this system are the same as those given in accordance with the first aspect, second aspect and fourth aspect respectively.

### Brief Description of the Drawings

The invention shall now be described, by way of example only, with reference to the accompanying drawings in which:
Figure 1 is an illustration of a portable battery pack according to an embodiment of the invention;
Figure 2 is an illustration of the portable battery pack of Figure 1 as part of a system containing an activation station and an authorisation server;
Figure 3 shows the portable battery pack of Figure 1 in a recharging mode;
Figure 4 shows the portable battery pack of Figure 1 in a discharging mode;
Figure 5 shows the portable battery pack of Figure 1 in a locked mode; and
Figure 6 illustrates a portable battery pack according to an alternative embodiment of the invention.

### Detailed Description

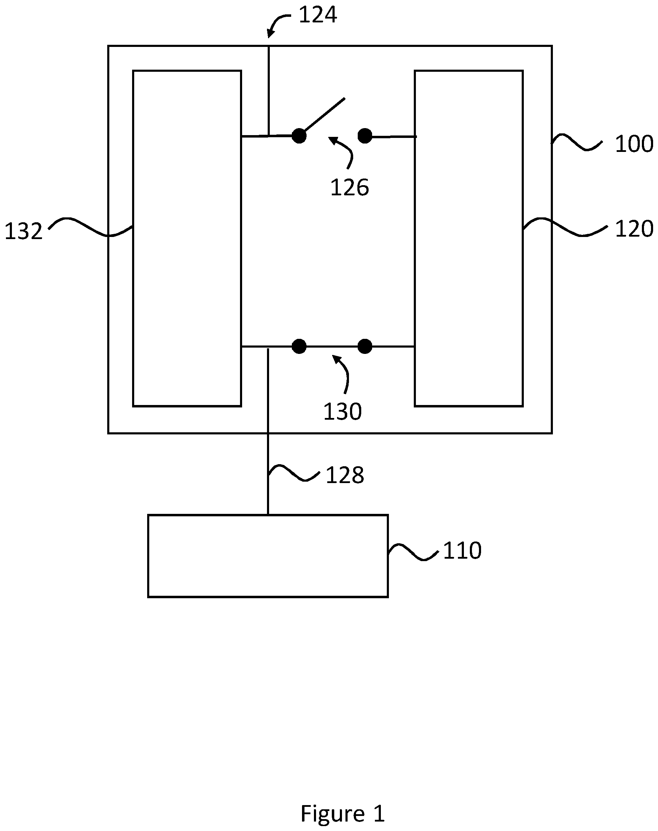

Figure 1 illustrates a portable battery pack 100. The portable battery pack 100 has cells 120 which store electrical energy and which are currently fully charged. The portable battery pack 100 may have been rented by a user of a battery rental scheme, who has taken the portable battery pack 100 home to power an electrical device 110, such as a smartphone or light, because the user does not have access to mains electricity.

The cells 120 are connected to an outlet 128 via a discharging switch 130. The user connects their device 110 to the outlet 128 in order to provide the device 110 with electricity. In the example of Figure 1, the discharging switch 130 is closed, so the device 110 will receive electricity from the cells 120.

The cells 120 are also attached to connection 124 via charging switch 126. When the cells 120 are empty, the connection 124 can be attached to a charger to recharge the cells 120. However, in the example of Figure 1, the charging switch 126 is open which currently prevent the cells 120 from being charged by the user.

The status of the charging switch 126 and discharging switch 130 are controlled by processor 132 based on a signal received by the processor 132 when the portable battery pack 100 was last attached to an activation station. To recharge the cells 120 in the portable battery pack 100, the user must reconnect the portable battery pack 100 to an activation station.

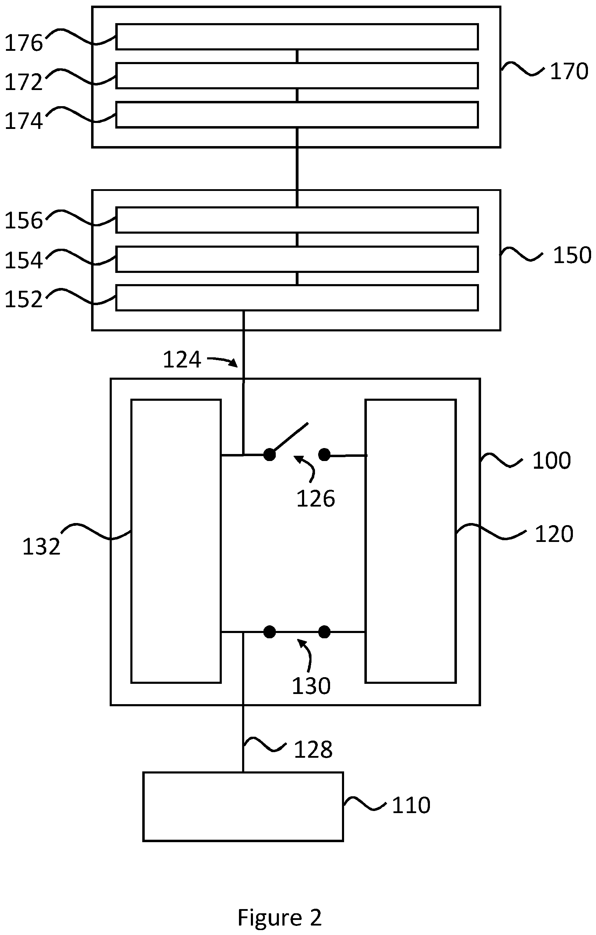

Figure 2 illustrates an activation station 150. The user has connected the portable battery pack 100 to the activation station 150 using the connection 124, for example, by plugging a wire between the connection 124 of the portable battery pack 100 and the activation station 150.

The activation station 150 has a charge controller 152 which provides electrical energy to the portable battery pack 100 which can charge the cells 120. Currently, the charging switch 126 is still open, so no electrical energy will be provided to the cells 120.

The portable battery pack processor 132 sends identifying information to the activation station processor 154. The activation station processor 154 sends the identifying information, using activation station modem 156, to authorisation server 170.

The authorisation server processor 172 uses the identifying information to look for relevant authorisation information in authorisation server memory 176 which indicates whether portable battery pack 100 is authorised for charging and/or discharging of the cells 120. In this case, the authorisation server memory 176 contains authorisation information that indicates that the portable battery pack 100 is authorised for charging and discharging.

The authorisation server processor 172 sends the authorisation information to the activation station 150 using authorisation server modem 174 and activation station modem 156.

The authorisation server 170 is typically remote from the activation station 150, so the activation station 154 and the authorisation server 170 will communicate over a telecommunications network, such as the internet, or a mobile, wired, wireless or satellite network.

The activation station processor 154 receives the authorisation information and the activation station processor 154 generates a signal which indicates that the cells 120 in the portable battery pack 100 are authorised for charging and discharging.

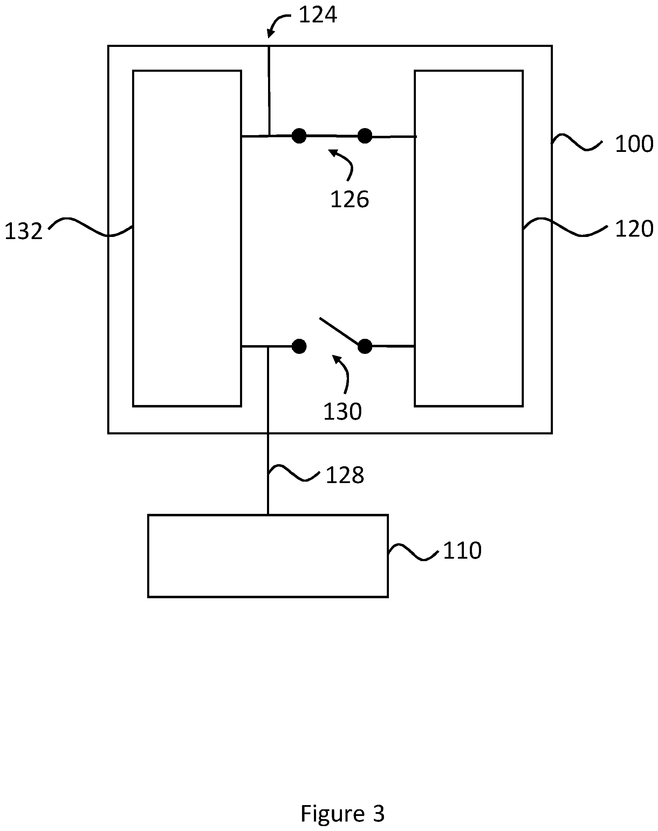

The signal is sent to the portable battery pack 100 via connection 124. The processor 132 analyses the signal and determines that the portable battery pack 100 is authorised for charging and discharging. So, the portable battery pack processor 132 closes the charging switch 126 so that cells 120 can be charged (as shown in Figure 3).

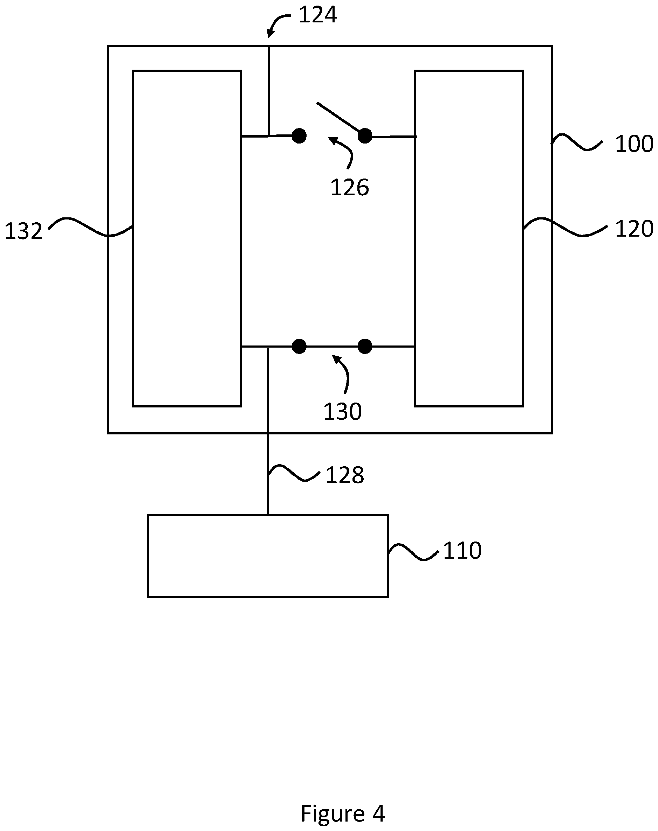

The charge controller 152 provides electrical power to the cells 120. The charge controller 152 monitors the charging of cells 120 and when the cells 120 are full, or at least when the cells 120 have been sufficiently charged, the activation station processor 154 sends a further signal to the portable battery pack processor 132 to indicate that charging has finished and the charging switch 126 is opened so that no further charging is possible (as shown in Figure 4).

The activation station processor 154 sends a signal to the portable battery pack processor 132 to indicate that discharging is authorised and the portable battery pack processor 132 closes the discharging switch 130 so that electrical energy stored in the charged cells 120 is now available to devices connected to the output 128, such as device 110.

The user of the portable battery pack 100 can now disconnect the portable battery pack 100 from the activation station 150 and take the portable battery pack 100 to wherever the portable battery pack 100 is needed. For example, the user may decide to take the portable battery pack 100 back home to power lights in their house, or alternatively to charge electronic device such as a mobile phone.

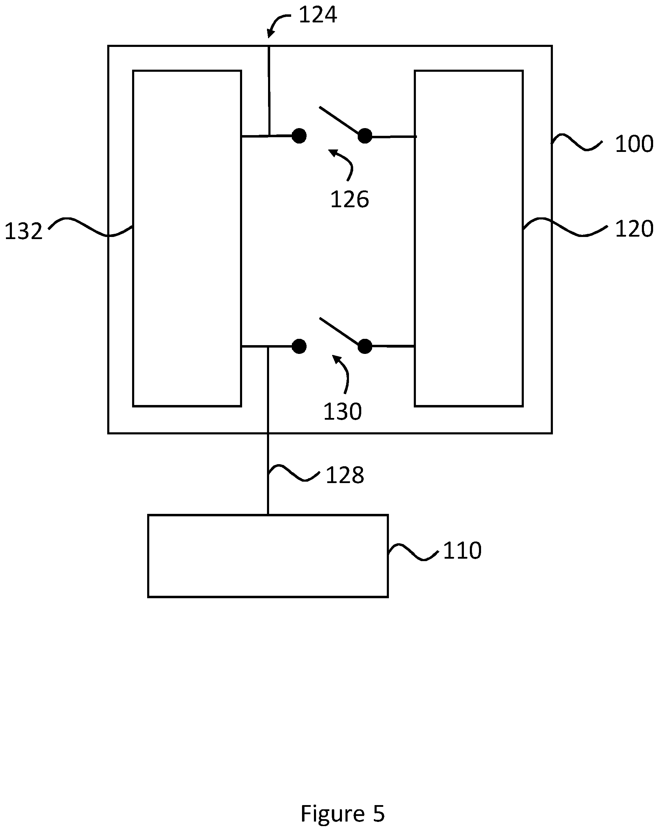

After a period of time has elapsed, for example after 24 hours have elapsed since charging, the processor 132 opens the discharging switch 130 so that no further electrical energy is available to device 110 that is attached to outlet 128 (as shown in Figure 5).

As shown in Figure 5, both the charging switch 126 and discharging switch 130 are open and the battery is effectively locked so that no charging or discharging can occur until the portable battery pack 100 is returned to an activation station 150 to have the charging switch 126 and discharging switch 130 reset into a closed position. This prevents the portable battery pack 100 from being charged on unauthorised equipment, such as an unauthorised solar panel, which could damage the portable battery pack 100, or lead to an increased risk of overheating of the portable battery pack 100 which could even lead to fire.

The user takes the portable battery pack 100 back to an activation station 150, the activation station 150 can again confirm, after communication with the authorisation server 170, whether the portable battery pack 100 is authorised for further charging and/or discharging and, if the portable battery pack 100 is authorised for further charging and/or discharging, the portable battery pack 100 may be recharged as described above in relation to Figure 2.

After repeated recharging, the performance of the portable battery pack 100 may degrade. In some cases, there may be insufficient charge in the cells 120 to last the whole period when discharging is enabled. In other cases, the portable battery pack 100 may be faulty. It is desirable to identify degraded and faulty portable battery packs so that they are replaced. Otherwise, users may be dissatisfied.

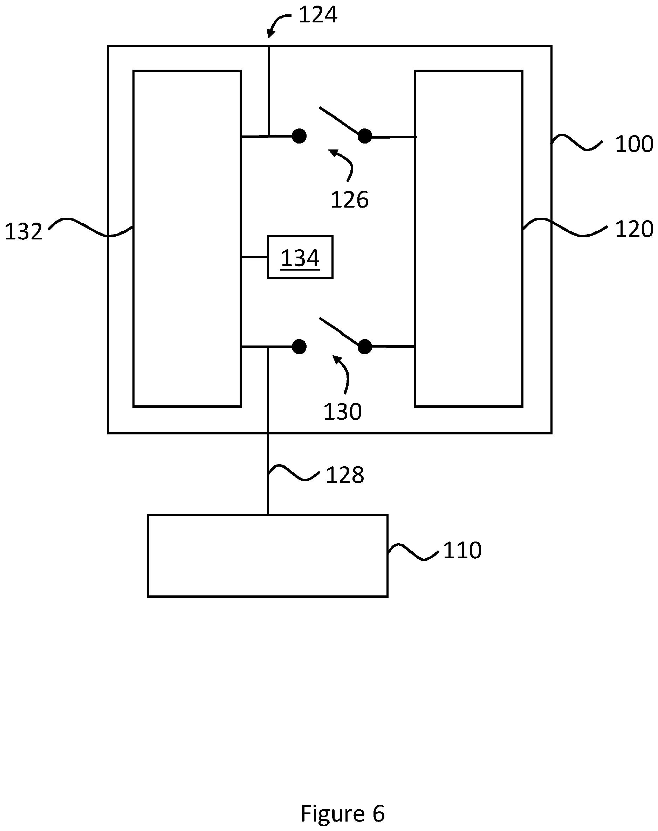

Figure 6 illustrates a portable battery pack 100 which may be used to help identify degraded or faulty portable battery packs. To do this, the portable battery pack 100 has a memory 134 which stores a log file.

The log file contains historical usage information about the portable battery pack 100. For example, the log file may contain, amongst other information: the number of times the portable battery pack has been charged and/or discharged; the current draw profile for each occasion the portable battery pack has been discharged; the total length of discharge since the last charge; the charging conditions for each occasion the portable battery pack has been charged (such as the voltage and/or current supplied during charging); and any errors or faults that have occurred.

The log file is sent to the activation station 150 every time the portable battery pack 100 is connected to the activation station 150. The activation station 150 sends the log file to the authorisation server 170, so that usage information on all of the portable battery packs that are in service may be stored and analysed.

The authorisation server 170 uses the log file to determine whether the portable battery pack 100 should be retired because it is old or faulty. For example, the log file may indicate that the cells 120 in the portable battery pack 100 are no longer performing adequately; or may record that the cells 120 were exhausted too quickly.

When the authorisation server 170 determines that the portable battery pack 100 should be retired, the authorisation server 170 sends a signal to the activation station 150, instructing the activation station 150 to send a signal to the portable battery pack 100 that the portable battery pack 100 is not authorised for charging or discharging. In response, the portable battery pack processor 132 opens charging switch 126 and discharging switch 130 so that the portable battery pack 100 may no longer be charged or discharged.

The authorisation server 170 marks the authorisation information relating to the portable battery pack 100 to indicate that the portable battery pack 100 is retired and should never be enabled for charging or discharging.

Although the invention has been described in terms of certain preferred embodiments, the skilled person will appreciate that various modifications could be made without departing from the scope of the claims.

Although the activation station 150 has been described as having a charge controller 152 so that the activation station 150 may recharge portable battery packs 100 as well as enable and/or disable charging and/or discharging of the portable battery packs 100, the activation station 150 may not have a charge controller 152.

Instead, charged portable battery packs 100 may be delivered to the activation station 150 after having been charged elsewhere (such as, in a location where a large quantity of renewable power is available to charge the portable battery packs 100). The portable battery packs 100 which are delivered to the activation station 100 may have charging and discharging disabled, to reduce the incentive to steal the portable battery packs 100. Before delivery to a user, discharging of the portable battery pack 100 may be enabled using the activation station 150.

Although the authorisation server 170 has been described as being remote, and therefore separate, from the activation station 150, the authorisation server 170 and the activation station 150 could be combined.

Multiple activation stations 150 may be in communication with a single authorisation server 170.

Multiple portable battery packs 100 may be connected to each activation station 150 for authorisation and/or charging.

The portable battery pack processor 132 may be further configured to send a charging specification to the charge controller 152. The charging specification indicates the preferred charging conditions of the portable battery pack 100, thereby ensuring that optimum charging of the portable battery pack 100 is achieved, based on the type of cells 120 in the portable battery pack 100, thereby improving the lifetime of the cells 120 and reducing the risk of failure, damage, overheating or fire. Alternatively, the authorisation server 170 may store information about the preferred conditions of the portable battery pack 100, and the charging specification may be retrieved from the authorisation server 170.

Although the portable battery pack 100 is shown as having a single outlet 128, the portable battery pack 100 may have multiple outlets.

Although only a single connection 124 is show which carries both electrical energy and the signal between the activation station 150 and the portable battery pack 100, the portable battery pack 100 could have separates inputs, that is, a separate electrical energy input and signal input.

As discussed above, the signal may indicate the period of time for which discharging is authorised. The period of time may be one of a period of time since the cells 120 were last charged; a period of time since discharge first began following the last time the cells 120 were charged; or a sum of the discharge time since the last time the cells 120 were charged. Alternatively, the signal may indicate that discharging is authorised until a certain charge level of the cells 120 is reached, or the cells 120 are depleted.

The signal may comprise depth of discharge information. The portable battery pack processor 132 may disable discharge (that is, open discharging switch 130) based on the depth of discharge information. This allows depth of discharge to be dynamically controlled by the activation station 150, to manipulate charging time while seeking to maximise the life of the cells 120. Over-discharging the cells 120 may be avoided where unnecessary (for example, when there is sufficient time to fully charge the cells). However, if there is insufficient time to fully charge the cells 120, the signal may be configured to indicate that the end of discharge voltage may be dropped so that the cells 120 appear to a user to have been given a full charge.

The portable battery pack 100, activation station 150 and authorisation server 170 may communicate over a secure communication link. The secure communication link may be encrypted.

The secure communications link between the portable battery pack 100 and the authorisation server 170 may be a tunnel using the modem 156 in the activation station 150, so that the portable battery pack 100 does not require a modem.

## Claims

1. A portable battery pack (100) comprising:
an input (124) removably connectable to an activation station (150) for controlling discharging of the portable battery pack (150) when the portable battery pack is subsequently disconnected and remote from the activation station (150);
one or more cells (120) configured to store electrical energy;
a processor (132) configured to enable and disable the discharging of the one of more cells (120) based on a discharging authorisation signal received at the input from the activation station (150) when the input (124) is connected to the activation station (150), in order to enable and disable the discharging of the portable battery pack (100) when disconnected and remote from the activation station (150);
wherein subsequent to discharging being enabled and the portable battery pack (100) being disconnected and remote from the activation station (150), the processor (132) is configured to disable discharging of the one or more cells (120) until the portable battery pack (100) is reconnected to the activation station (150) and discharging is re-authorised by the activation station (150), wherein discharging of the one of more cells (120) is disabled after either a period of time indicated by the authorisation signal has elapsed or a depth of discharge indicated by the authorisation signal is reached; and
an electrical output (128) configured to provide electrical energy to a device (110) connected to the electrical output (128) only when discharging is enabled and not when discharging is disabled.

2. The portable battery pack (100) of claim 1, wherein the period of time is one of: a period of time since discharging of the one or more cells was enabled; a period of time since discharging of the one or more cells first began following the last time discharging of the one or more cells (120) was enabled; or a sum of the discharge time since the last time discharging of the one or more cells (120) was enabled.

3. The portable battery pack (100) of either of claims 1 or 2, wherein the one or more cells (120) are configured to be charged by a charge controller (152) in the activation station (150).

4. The portable battery pack (100) of claim 3, wherein the processor (132) is further configured to send a charging specification to the charge controller in the activation station (150).

5. The portable battery pack (100) of any preceding claim, wherein the processor (132) is configured to send a log file containing historical usage information of the portable battery pack (100) to the activation station (150), wherein the historical usage information is used to determine whether discharging should be disabled.

6. The portable battery pack (100) of any preceding claim, wherein the input (124) is removably connectable to the activation station (150) by a wired or wireless connection.

7. An activation station (150) for a portable battery pack (100) having one or more cells (120) configured to store electrical energy, the activation station (150) comprising:
an output (124) removably connectable to a portable battery pack (100) for controlling discharging of the portable battery pack (100) when the portable battery pack (100) is subsequently disconnected and remote from the activation station (150); and
a processor (154) configured to:
send, to the output (124), a discharging authorisation signal in order to enable and disable the discharging of the portable battery pack (100) when disconnected and remote from the activation station (150), wherein the discharging authorisation signal indicates that discharging is to be disabled subsequent to the portable battery pack (100) being disconnected and remote from the activation station (150) after either a period of time indicated by the authorisation signal has elapsed or a depth of discharge indicated by the authorisation signal is reached; and
send, to the output (124), a signal indicating that charging of the one or more cells (120) is not authorised when a desired charge level of the one or more cells (120) is obtained, in order to prevent unauthorised recharging of the one or more cells (120); and
upon reconnection of the portable battery pack (100) to the output (124), send, to the output (124), a discharging re-authorisation signal in order to re-enable or disable the discharging of the portable battery pack (100) when disconnected and remote from activation station (150).

8. The activation station (150) of claim 7, wherein the processor (154) is configured to send a signal to the output (124) indicating that discharging of the one or more cells (120) is authorised when a desired charge level of the one or more cells (120) is obtained.

9. The activation station (150) of claim 8, wherein the processor (154) is configured to generate a discharging authorisation signal based on authorisation information obtained from an authorisation server (170).

10. The activation station (150) of any of claims 7 to 9, further comprising a charge controller (152) configured to charge the one or more cells (120) of the portable battery pack (100).

11. The activation station (150) of claim 10, wherein the charge controller (152) is configured to adjust the rate of charging of the one or more cells (120) based on either: the time of day; or a desired charging time.

12. The activation station (150) of any of claims 7 to 11, wherein the output (124) is removably connectable to the portable battery pack by a wired or wireless connection.

13. A system comprising:
at least one portable battery pack (100) configured according to any of claims 1 to 6, and
an activation station (150) configured according to any of claims 7 to 12.

## Patentansprüche

1. Tragbares Batteriepack (100), umfassend:
einen Eingang (124), der abnehmbar mit einer Aktivierungsstation (150) verbunden werden kann, um das Entladen des tragbaren Batteriepacks (100) zu steuern, wenn das tragbare Batteriepack anschließend abgetrennt und von der Aktivierungsstation (150) entfernt ist;
eine oder mehrere Zellen (120), die so konfiguriert sind, dass sie elektrische Energie speichern;
einen Prozessor (132), der so konfiguriert ist, dass er das Entladen der einen oder der mehreren Zellen (120) auf der Grundlage eines Autorisierungssignals zum Entladen, das an dem Eingang von der Aktivierungsstation (150) empfangen wird, wenn der Eingang (124) mit der Aktivierungsstation (150) verbunden ist, aktiviert und deaktiviert, um das Entladen des tragbaren Batteriepacks (100) zu aktivieren und zu deaktivieren, wenn es von der Aktivierungsstation (150) getrennt und entfernt ist;
wobei der Prozessor (132) so konfiguriert ist, dass er nach dem Aktivieren des Entladens und des Trennens des tragbaren Batteriepacks (100) von der Aktivierungsstation (150) das Entladen der einen oder der mehreren Zellen (120) deaktiviert, bis das tragbare Batteriepack (100) wieder mit der Aktivierungsstation (150) verbunden wird und das Entladen durch die Aktivierungsstation (150) erneut autorisiert wird, wobei das Entladen der einen oder der mehreren Zellen (120) deaktiviert wird, nachdem entweder eine durch das Autorisierungssignal angegebene Zeitspanne verstrichen ist oder eine durch das Autorisierungssignal angegebene Entladetiefe erreicht ist; und
einen elektrischen Ausgang (128), der so konfiguriert ist, dass er einer an den elektrischen Ausgang (128) angeschlossenen Vorrichtung (110) nur dann elektrische Energie zuführt, wenn die Entladung aktiviert ist, und nicht, wenn die Entladung deaktiviert ist.

2. Tragbares Batteriepack (100) nach Anspruch 1, wobei die Zeitspanne eine der folgenden ist: eine Zeitspanne, seit das Entladen der einen oder der mehreren Zellen aktiviert wurde; eine Zeitspanne, seit das Entladen der einen oder der mehreren Zellen zum ersten Mal begann, nachdem das Entladen der einen oder der mehreren Zellen (120) zum letzten Mal aktiviert wurde; oder eine Summe der Entladezeit seit dem letzten Mal, als das Entladen der einen oder der mehreren Zellen (120) aktiviert wurde.

3. Tragbares Batteriepack (100) nach einem der Ansprüche 1 oder 2, wobei die eine oder die mehreren Zellen (120) so konfiguriert sind, dass sie durch einen Laderegler (152) in der Aktivierungsstation (150) geladen werden.

4. Tragbares Batteriepack (100) nach Anspruch 3, wobei der Prozessor (132) ferner so konfiguriert ist, dass er eine Ladespezifikation an den Laderegler in der Aktivierungsstation (150) sendet.

5. Tragbares Batteriepack (100) nach einem der vorhergehenden Ansprüche, wobei der Prozessor (132) so konfiguriert ist, dass er eine Protokolldatei, die historische Nutzungsinformationen des tragbaren Batteriepacks (100) enthält, an die Aktivierungsstation (150) sendet, wobei die historischen Nutzungsinformationen verwendet werden, um zu bestimmen, ob das Entladen deaktiviert werden sollte.

6. Tragbares Batteriepack (100) nach einem der vorhergehenden Ansprüche, wobei der Eingang (124) über eine drahtgebundene oder drahtlose Verbindung abnehmbar mit der Aktivierungsstation (150) verbunden werden kann.

7. Aktivierungsstation (150) für ein tragbares Batteriepack (100) mit einer oder mehreren Zellen (120), die zum Speichern elektrischer Energie konfiguriert sind, wobei die Aktivierungsstation (150) Folgendes umfasst:
einen Ausgang (124), der abnehmbar mit einem tragbaren Batteriepack (100) verbunden werden kann, um das Entladen des tragbaren Batteriepacks (100) zu steuern, wenn das tragbare Batteriepack (100) anschließend abgetrennt und von der Aktivierungsstation (150) entfernt wird, und
einen Prozessor (154), der so konfiguriert ist, dass er:
ein Autorisierungssignal zum Entladen an den Ausgang (124) sendet, um das Entladen des tragbaren Batteriepacks (100) zu aktivieren und zu deaktivieren, wenn es von der Aktivierungsstation (150) getrennt und entfernt ist, wobei das Autorisierungssignal zum Entladen anzeigt, dass das Entladen zu deaktivieren ist, nachdem das tragbare Batteriepack (100) von Aktivierungsstation (150) getrennt und entfernt wurde, nachdem entweder eine durch das Autorisierungssignal angezeigte Zeitspanne verstrichen ist oder eine durch das Autorisierungssignal angezeigte Entladetiefe erreicht ist; und
ein Signal an den Ausgang (124) sendet, das anzeigt, dass das Laden der einen oder der mehreren Zellen (120) nicht autorisiert ist, wenn ein gewünschter Ladezustand der einen oder mehreren Zellen (120) erreicht ist, um ein unautorisiertes Wiederaufladen der einen oder der mehreren Zellen (120) zu verhindern; und
bei Wiederanschluss des tragbaren Batteriepacks (100) an den Ausgang (124) ein Wiederzulassungssignal zum Entladen an den Ausgang (124) sendet, um das Entladen des tragbaren Batteriepacks (100) wieder zu aktivieren oder zu deaktivieren, wenn dieses von der Aktivierungsstation (150) getrennt und entfernt ist.

8. Aktivierungsstation (150) nach Anspruch 7, wobei der Prozessor (154) so konfiguriert ist, dass er ein Signal an den Ausgang (124) sendet, das anzeigt, dass das Entladen der einen oder der mehreren Zellen (120) autorisiert ist, wenn ein gewünschter Ladezustand der einen oder der mehreren Zellen (120) erreicht ist.

9. Aktivierungsstation (150) nach Anspruch 8, wobei der Prozessor (154) so konfiguriert ist, dass er ein Autorisierungssignal zum Entladen auf der Basis von Autorisierungsinformationen erzeugt, die er von einem Autorisierungsserver (170) erhält.

10. Aktivierungsstation (150) nach einem der Ansprüche 7 bis 9, ferner umfassend einen Laderegler (152), der so konfiguriert ist, dass er die eine oder die mehreren Zellen (120) des tragbaren Batteriepacks (100) auflädt.

11. Aktivierungsstation (150) nach Anspruch 10, wobei der Laderegler (152) so konfiguriert ist, dass er die Laderate der einen oder der mehreren Zellen (120) entweder auf der Basis der Tageszeit oder einer gewünschten Ladezeit anpasst.

12. Aktivierungsstation (150) nach einem der Ansprüche 7 bis 11, wobei der Ausgang (124) durch eine drahtgebundene oder drahtlose Verbindung abnehmbar mit dem tragbaren Batteriepack verbunden werden kann.

13. Ein System, das Folgendes umfasst:
mindestens ein tragbares Batteriepack (100), das nach einem der Ansprüche 1 bis 6 konfiguriert ist, und
eine Aktivierungsstation (150), die nach einem der Ansprüche 7 bis 12 konfiguriert ist.

## Revendications

1. Pack de batterie portable (100) comprenant :
- une entrée (124) reliée de manière amovible à un poste d'activation (150) pour commander la décharge du pack de batterie portable (150) lorsque le pack de batterie portable est ensuite débranché et enlevé du poste d'activation (150),
- une ou plusieurs cellules (120) configurée pour stocker de l'énergie électrique,
- un processeur (132) configuré pour autoriser ou interdire la décharge d'une ou plusieurs cellules (120) en fonction d'un signal d'autorisation de décharge reçu à l'entrée par le poste d'activation (150) lorsque l'entrée (124) est reliée au poste d'activation (150), pour autoriser ou interdire la décharge du pack de batterie portable (100) lorsqu'il est débranché et enlevé du poste d'activation (150),
pack de batterie portable dans lequel
après l'autorisation de la décharge et le débranchement du pack de batterie portable (100) et son enlèvement du poste d'activation (150), le processeur (132) est configuré pour interdire la décharge d'une ou plusieurs cellules (120) jusqu'à ce que le pack de batterie portable (100) soit re-branché au poste d'activation (150) et la décharge soit réautorisée par le poste d'activation (150),
* la décharge d'une ou plusieurs cellules (120) étant interdite soit après la fin d'une période de temps indiquée par le signal d'autorisation, soit que le niveau de décharge indiqué par le signal d'autorisation soit atteint, et
- une sortie électrique (128) est configurée pour fournir l'énergie électrique à un dispositif (110) relié à la sortie électrique (128) seulement si la décharge est autorisée et non lorsque la décharge est interdite.

2. Pack de batterie portable (100) selon la revendication 1,
dans lequel
la période de temps est une des périodes suivantes :
- la période de temps depuis la décharge autorisée d'une ou plusieurs cellules,
- la période de temps depuis la décharge d'une ou plusieurs cellules qui a d'abord commencé après le dernier temps de décharge autorisée d'une ou plusieurs cellules (120) ; ou la somme du temps de décharge depuis le moment autorisant la décharge d'une ou plusieurs cellules (120).

3. Pack de batterie portable (100) selon la revendication 1 ou 2,
dans lequel
une ou plusieurs cellules (120) sont configurées pour être chargées par un contrôleur de charge (152) dans le poste d'activation (150).

4. Pack de batterie portable (100) selon la revendication 3,
dans lequel
le processeur (132) est en outre configuré pour envoyer une spécification de charge au contrôleur de charge du poste d'activation (150).

5. Pack de batterie portable (100) selon l'une quelconque des revendications précédentes,
dans lequel
le processeur (132) est configuré pour envoyer un fichier-journal contenant l'historique de l'information d'utilisation du pack de batterie portable (100) pour le poste d'activation (150), cet historique d'information d'utilisation servant à déterminer si la décharge doit être interdite.

6. Pack de batterie portable (100) selon l'une quelconque des revendications précédentes,
dans lequel
l'entrée (124) est reliée de manière amovible au poste d'activation (150) par une liaison par câble ou sans câble.

7. Poste d'activation (150) pour un pack de batterie portable (100) ayant une ou plusieurs cellules (120) configurées pour stocker de l'énergie électrique, ce poste d'activation (150) comprenant :
- une sortie (124) branchée de manière amovible à un pack de batterie portable (100) pour commander la décharge du pack de batterie portable (100) lorsque ce pack de batterie portable (100) est ensuite débranché et enlevé du poste d'activation (150), et
- un processeur (154) configuré pour :
* envoyer à la sortie (124) un signal d'autorisation de décharge pour autoriser ou interdire la décharge du pack de batterie portable (100) lorsqu'il est débranché et enlevé du poste d'activation (150),
* indiquer par le signal d'autorisation de décharge que la décharge doit être interdite après que le pack de batterie portable (100) ait été débranché et enlevé du poste d'activation (150) après la fin d'une période de temps indiquée par le signal d'autorisation ou que le niveau de décharge indiqué par le signal d'autorisation est atteint, et
* envoyer à la sortie (124) un signal indiquant que la charge d'une ou plusieurs cellules (120) n'est pas autorisée si le niveau de charge souhaité d'une ou plusieurs cellules (120) est atteint, pour éviter une recharge non autorisée d'une ou plusieurs cellules (120), et
* lors du rebranchement du pack de batterie portable (100) sur la sortie (124), envoyer à la sortie (124) un signal réautorisant la décharge pour réautoriser ou interdire la décharge du pack de batterie portable (100) s'il est débranché et enlevé du poste d'activation (150).

8. Pack de batterie portable (150) selon la revendication 7,
dans lequel
le processeur (154) est configuré pour envoyer un signal à la sortie (124) indiquant que la décharge d'une ou plusieurs cellules (120) est autorisée si l'on a atteint un niveau de charge souhaité pour une ou plusieurs cellules (120).

9. Pack de batterie portable (150) selon la revendication 8,
dans lequel
le processeur (154) est configuré pour générer un signal d'autorisation de décharge fondé sur une information d'autorisation fournie par le serveur d'autorisation (170).

10. Pack de batterie portable (150) selon l'une quelconque des revendications 7 à 9,
comprenant en outre un contrôleur de charge (152) configuré pour charger une ou plusieurs cellules (120) du pack de batterie portable (100).

11. Pack de batterie portable (150) selon la revendication 10,
dans lequel
le contrôleur de charge (152) est configuré pour régler le taux de charge d'une ou plusieurs cellules (120) en se fondant sur le moment de la journée, ou sur le moment de charge souhaitée.

12. Pack de batterie portable (150) selon l'une quelconque des revendications 7 à 11,
dans lequel
la sortie (124) est branchée de manière amovible au pack de batterie portable par une liaison par câble ou sans câble.

13. Système comprenant :
- au moins un pack de batterie portable (100) configuré selon l'une quelconque des revendications 1 à 6, et
- un poste d'activation (150) configuré selon l'une quelconque des revendications 7 à 12.
